# EUROPÄISCHE PATENTANMELDUNG

(11) **EP 2 348 793 A1**
(43) Veröffentlichungstag der Anmeldung: **27.07.2011**
(21) Anmeldenummer: 10151227.5
(22) Anmeldetag: 20.01.2010
(51) Int. Cl.: H05B 33/08

(54) **Leuchtmittel mit LED und Treiberschaltung**

(71) Anmelder: ATLAS Elektronik GmbH, 28309 Bremen (DE)
(72) Erfinder: Wittschief, Norbert, 28832, Achim (DE); Wiesner, Uwe, 28355, Bremen (DE)
(74) Vertreter: Wasiljeff, Johannes M.B.

(57) **Zusammenfassung**

Die Erfindung betrifft ein Leuchtmittel LM mit einer LED (Lumineszenzdiode) 12a-c und einer Treiberschaltung 10 zur elektrische Versorgung der LED 12a-c mit einer sinusförmigen Netzwechselspannung 18. Da seit einiger Zeit in immer mehr Ländern ein allgemeines Verbot von Glühfadenlampen als Leuchtmittel diskutiert, geplant und teilweise beschlossen wird, muss ein passender Ersatz für die schon bald verbotenen Glühfadenlampen und ähnliche Leuchtmittel gefunden werden. Dieser Ersatz muss eine hohe Energieeffizienzklasse aufweisen, bzw. einen hohen Wirkungsgrad erreichen und günstig herzustellen sein. Die Erfindung löst die Aufgabe mit einem neuen Leuchtmittel LM mit Treiberschaltung 10, wobei die Treiberschaltung in bestimmter Weise ausgelegt ist. Bei der Auslegung wird die Erkenntnis ausgenutzt, dass oberhalb einer Frequenz von etwa 48 Hertz das menschliche Auge ein kurzzeitiges Abfallen der Versorgungsspannung für die LED 12a-c unterhalb eines Arbeitspunktes nicht wahrgenommen werden kann. Die Treiberschaltung 10 wird also in einer Art betrieben, die die Ausgangsspannung 11 der Treiberspannung bereits bei Sollspannung einer sinusförmigen Netzwechselspannung mit der Frequenz dieser Netzwechselspannung unter den Arbeitspunkt der LED 12a-c abfällt und somit eine geringe Verlustleistung in der Treiberschaltung 10 erzeugt wird.

## Beschreibung

Die Erfindung betrifft ein Leuchtmittel mit einer LED (Lumineszenzdiode) und einer Treiberschaltung zur elektrischen Versorgung der LED nach dem Oberbegriff von Anspruch 1, wobei die Treiberschaltung zum Betrieb mit einer sinusförmigen Netzwechselspannung ausgelegt ist. Ferner betrifft die Erfindung ein Verfahren zum Betreiben des Leuchtmittels nach dem Oberbegriff von Anspruch 9, eine Verwendung eines Leuchtmittels nach Anspruch 13 sowie ein Verfahren zur Dimensionierung des Leuchtmittels nach Anspruch 14.

Gemäß dem Stand der Technik werden meist Glühfadenlampen als Leuchtmittel zur künstlichen Beleuchtung genutzt. Dabei hat sich im Laufe der Zeit eine Vielzahl von Ausprägungen bezüglich etwa der Form und Helligkeit ergeben.

Seit einiger Zeit wird in immer mehr Ländern ein allgemeines Verbot dieser Art von Leuchtmitteln diskutiert, geplant und teilweise beschlossen. Grund für das Verbot ist, dass die Energieeffizienz dieser Leuchtmittel nicht dem heutigen Standard entspricht.

Ferner wurden bereits Leuchtmittel mit LEDs eingeführt. LEDs verbrauchen vergleichsweise weniger Energie als Glühfadenlampen. LEDs arbeiten in einem definierten Arbeitspunkt, der sich durch eine konstant einzustellende Spannung bzw. einen konstant einzustellenden Strom auszeichnet. Nachteil der LEDs ist, dass diese einen sog. LED-Treiber, auch Treiberschaltung genannt, benötigen, um an eine Spannungsversorgung angeschlossen und in ihrem Arbeitspunkt betrieben zu werden.

Es sind LED-Treiber bekannt, die als lineare LED-Treiber bezeichnet werden. Diese Treiber setzen grundsätzlich eine höhere Versorgungsspannung auf eine niedrigere LED-Spannung nach Art eines Spannungsteilers um. Durch Auslegung von z.B. Widerständen im Treiber wird ein definierter Arbeitspunkt für die Versorgung der LED eingestellt. In derartigen LED-Treibern wird durch die Spannungsumsetzung somit elektrische Energie in ungenutzte Wärme umgesetzt, die sich im Wesentlichen aus dem Produkt des Spannungsabfalls am LED-Treiber und dem von den LEDs benötigen Strom ergibt.

Bei kleinen LED-Strömen und geringem Spannungsabfall am LED-Treiber durch kleine Versorgungsspannungen, ist diese in Wärme ungewandelte elektrische Energie, die einer Verlustleistung entspricht, vertretbar. Bei hohen Versorgungsspannungen, etwa im Bereich herkömmlicher sinusförmiger Netzwechselspannungen, ist diese Verlustleistung jedoch sehr hoch und daher der Wirkungsgrad der LED-Treiberschaltung sehr gering.

Weiterhin ist nachteilhaft, dass der Wirkungsgrad einer LED mit zunehmender Temperatur abnimmt. Ist also ein linearer LED-Treiber räumlich so nahe an der LED angebracht, dass thermische Energie auf die LED übergeht, so wird der unter Umständen ohnehin schon geringe Wirkungsgrad des Treibers weiter dadurch reduziert, dass die LED erhitzt wird.

Ferner sind LED-Treiber bekannt, die einen besseren Wirkungsgrad aufweisen. Diese sog. getakteten LED-Treiber oder Step-Down-Wandler sind Schaltungen, die LEDs nach dem Prinzip von Schaltnetzteilen ansteuern. Diese Schaltungen weisen einen Oszillator auf, der einen elektronischen Schalter taktet. Durch Takten wird die mit der Versorgungsspannung in Spulen oder Kondensatoren aufgebaute Energie in einen Ausgangskreis, an den die LEDs angeschlossen werden, mit wenig Verlust übertragen.

Getaktete LED-Treiber haben den Nachteil, dass sie im Grundsatz teurer als lineare LED-Treiber sind. Ursache hierfür ist, dass sie aufgrund des Aufbaus wesentlich komplexer sind. Ferner weisen diese häufig eine ungünstige elektromagnetische Verträglichkeit auf, da aufgrund der Schaltvorgänge Störfelder entstehen. Um eine elektromagnetische Verträglichkeit zu gewährleisten, müssen bei diesen LED-Treibern oft Entstörungsmaßnahmen getroffen werden. Auch wegen zur Entstörung notwendiger Einrichtungen sind LED-Treiber wesentlich aufwändiger im Aufbau und deswegen teurer als lineare LED-Treiber.

Der Erfindung liegt daher das Problem zugrunde, einen passenden Ersatz für die schon oder bald verbotenen Glühfadenlampen und ähnliche Leuchtmittel zu finden.

Die Erfindung löst dieses Problem durch die Merkmale des Leuchtmittels gemäß Anspruch 1, ein Verfahren zum Betreiben dieses Leuchtmittels gemäß Anspruch 9, eine Verwendung des Leuchtmittels gemäß Anspruch 13 und ein Verfahren zum Dimensionieren des Leuchtmittels nach Anspruch 14.

Der Erfindung liegt die Erkenntnis zugrunde, dass LEDs derart ausgebildet sind, dass bei kurzzeitigem Abfallen der Versorgungsspannung für die LED unterhalb der für den Arbeitspunkte festgelegten konstanten Spannung, die Lichtemittierung der LED nur leicht abnimmt oder kurzzeitig unterbrochen wird. Tritt ein derartiges Abfallen der Spannung mit einer bestimmten Mindestfrequenzen (etwa oberhalb von 48 Hz) auf, so kann das menschliche Auge einen entsprechenden Abfall nicht wahrnehmen.

Die Erfindung löst die Aufgabe mit einer neuen Schaltung, die der Gruppe der linearen LED-Treiber zuzuordnen ist und somit preisgünstig hergestellt werden kann. Im Gegensatz zu bekannten Schaltungen dieser Art, wird die Schaltung unter Anwendung der o.g. Erkenntnis in bestimmter Weise ausgelegt, so dass eine hohe Energieeffizienz bzw. ein hoher Wirkungsgrad erreicht werden kann.

Geht man von der herkömmlichen sinusförmigen Netzwechselspannung aus, so unterliegt diese tolerierten Schwankungen. Die Solleffektivspannung in den meisten Ländern, zumindest innerhalb der Europäischen Union, beträgt 230 Volt. Der Sollspitzenwert der Spannung ergibt sich aus einem Multiplizieren der Solleffektivspannung mit der Wurzel aus 2. Die Solleffektivspannung sowie der Sollspitzenwert der Spannung unterliegen Schwankungen. Beispielsweise schwankt eine Solleffektivspannung von 230 Volt in einem Toleranzbereich von etwa 180 Volt bis 260 Volt. Somit schwankt die Solleffektivspannung aber auch der Sollspitzenwert zwischen einem oberen und einem unteren Grenzbereich des jeweiligen Toleranzbereichs der sinusförmigen Netzwechselspannung.

Wie oben ausgeführt, benötigen LEDs hingegen eine konstante Spannungs- und Stromversorgung, um in einem definierten Arbeitspunkt arbeiten zu können. Wird dieser Arbeitspunkt durch Erhöhen der Spannung oder des Stroms überschritten, so tritt eine schnellere Alterung der LED auf. Unterschreitet die Spannung oder der Strom diesen Arbeitspunkt, wird die LED dunkler oder emittiert kein Licht mehr.

Um nun die o.g. Schwankungen im Toleranzbereich der sinusförmigen Netzwechselspannung bzw. entsprechende heruntertransformierte Spannungen mit entsprechenden Schwankungen nicht einer LED zuzuführen, werden in der Regel LED-Treiber derart ausgelegt, dass am Ausgang ein konstanter Strom bzw. eine konstante Spannung im gesamten Toleranzbereich der sinusförmigen Netzwechselspannung gegeben ist.

Bei derartiger Auslegung einer Treiberschaltung ergibt sich, dass die elektrische Energie nur in dem Fall, in dem der untere Grenzbereich des Toleranzbereichs der sinusförmigen Netzwechselspannung erreicht ist, minimale Verlustleistung entsteht. Bei Sollspannung der sinusförmigen Netzwechselspannung, die einen Sollspitzenwert aufweist, findet hingegen eine Umwandlung der elektrischen Energie in Wärme in der Treiberschaltung statt, der wesentliche höher ist als in dem Fall, bei dem der untere Grenzbereich des Toleranzbereichs der sinusförmigen Netzwechselspannung erreicht ist.

Diese Erfindung begegnet diesem Missstand, indem die Treiberschaltung des Leuchtmittels derart ausgelegt wird, dass schon bei Sollspannung der sinusförmigen Netzwechselspannung nur eine geringe Energie in Wärme umgesetzt wird und somit ein hoher Wirkungsgrad bzw. eine hohe Energieeffizienz erreicht wird.

Erfindungsgemäß besteht das Leuchtmittel aus mindestens einer LED, die im Weiteren auch als Last bezeichnet ist, und einer Treiberschaltung zur elektrischen Versorgung der mindestens einen LED. Die Treiberschaltung ist derart ausgelegt, dass der Treiberschaltung an einem Treibereingang die sinusförmige Netzwechselspannung im gesamten Toleranzbereich zugeführt werden kann. Weiterhin weist die Treiberschaltung einen Treiberausgang auf, mit dem die mindestens eine LED verbunden ist.

Die sinusförmige Netzwechselspannung wird über den Treibereingang einer Gleichrichterschaltung zugeführt, die einen Ausgang mit zwei Kontakten aufweist. An diesem Ausgang bzw. diesen Kontakten der Gleichrichterschaltung ist/sind mindestens ein Kondensator (d.h. ein oder mehrere Kondensatoren) parallel geschaltet, um die durch den Gleichrichter gleichgerichtete sinusförmige Netzwechselspannung zu glätten. Ebenfalls wird der Gleichrichterschaltung ein Spannungsregler ausgangsseitig angeschlossen, der die geglättete gleichgerichtete sinusförmige Netzwechselspannung auf einen konstanten Spannungswert regelt.

Die Treiberschaltung ist durch Bestimmung der Kapazität des mindestens einen Kondensators auf eine bestimmte Weise ausgelegt. Im Falle, dass die sinusförmige Netzwechselspannung im Bereich ihres Sollspitzenwertes oder Solleffektivwertes liegt, wird durch die Auslegung erreicht, dass der mindestens eine Spannungsregler mit einer derartigen Eingangsspannung betrieben wird, dass der mindestens eine Spannungsregler ausgangsseitig eine Ausgangsspannung liefert, die im Bereich des Minimums dieser Eingangsspannung abzufallen beginnt. Im "Bereich des Minimums" bedeutet im zeitlichen Bereich des Minimums des zeitlichen Verlaufs der geglätteten gleichgerichteten sinusförmigen Netzwechselspannung.

Vorteil einer derartigen Auslegung ist, dass im Gegensatz zu einer nach herkömmlichen Gesichtspunkten gestalteten Auslegung eines linearen LED-Treibers im Falle, dass die sinusförmige Netzwechselspannung ihren Solleffektivwert aufweist, eine geringere elektrische Energie in der erfindungsgemäßen Treiberschaltung in Wärme umgewandelt wird und somit ein hoher Wirkungsgrad bzw. eine hohe Energieeffizienz erreicht wird.

Die Erfindung stellt nach alledem einen Ersatz (Retrofit) für bereits oder alsbald verbotene Glühfadenlampen und ähnliche Leuchtmittel bereit, jedoch mit wesentlich verbesserter Energieeffizienz. Im Hinblick auf zukünftig weiterhin zugelassene Energieeffizienzklassen ist das erfindungsgemäße Leuchtmittel bei sinusförmiger Netzwechselspannung mit einer hohen Energieeffizienz, etwa der Energieeffizienzklasse A oder besser, betreibbar. Dabei ist ein erfindungsgemäßes Leuchtmittel preislich sehr günstig zu produzieren. Insbesondere ist es im Vergleich zu Glühfadenlampen preislich konkurrenzfähig.

Vorteilhafterweise ist das erfindungsgemäße Leuchtmittel derart ausgebildet, dass diese von vorhandenen standardisierten Leuchtmittelaufnahmen bzw. Fassungen aufgenommen werden kann und ebenfalls standardisierten Formen entspricht.

Nach einer vorteilhaften Ausbildung wird die Treiberschaltung durch Bestimmung der Kapazität des mindestens einen Kondensators derart ausgelegt, dass im Falle, dass der Spitzenwert oder Effektivwert der sinusförmigen Netzwechselspannung im unteren Grenzbereich ihres Toleranzbereichs liegen, der mindestens eine Spannungsregler eingangsseitig mit einer derartigen Eingangsspannung betrieben wird, dass der mindestens eine Spannungsregler ausgangsseitig eine Ausgangsspannung liefert, die signifikant vor Erreichen des Bereichs des Minimums der Eingangsspannung abzufallen beginnt.

"Signifikant" bedeutet in diesem Fall insbesondere, dass die Ausgangsspannung des Spannungsreglers zeitlich schon kurz nach Erreichen des Spitzenwertes der sinusförmigen Netzwechselspannung, im mittleren Bereich zwischen dem Spitzenwert und dem Minimum oder im mittleren Bereich zwischen den Spitzenwerten der Eingangsspannung von ihrem konstanten Wert beginnt abzufallen.

In diesem zuletzt genannten unteren Grenzbereich des Toleranzbereichs der sinusförmigen Netzwechselspannung, wird von der Treiberschaltung des Leuchtmittels nahezu keine oder nur eine sehr geringe elektrische Energie in Wärme umgewandelt. Somit wird ein sehr hoher Wirkungsgrad erreicht. Dabei ist das menschliche Auge nicht in der Lage, die abfallende Ausgangsspannung des Spannungsreglers als Flackern zu bemerken, da die Frequenz dieser Spannungsabfälle oberhalb der vom menschlichen Sehapparat auflösbaren Frequenz liegt.

Weiterhin ist es vorteilhaft die Treiberschaltung durch Bestimmung der Kapazität des mindestens einen Kondensators derart auszulegen, dass im Falle, dass der Spitzenwert oder Effektivwert der sinusförmigen Netzwechselspannung im oberen Grenzbereich ihres Toleranzbereichs liegen, der mindestens eine Spannungsregler eingangsseitig mit einer derartigen Eingangsspannung betrieben wird, dass der mindestens eine Spannungsregler ausgangsseitig eine Ausgangsspannung liefert, die einen konstanten Wert aufweist. Vorteil einer derartigen Auslegung der Treiberschaltung des Leuchtmittels ist, dass im oberen Grenzbereich der sinusförmigen Netzwechselspannung wesentlich weniger elektrische Energie in Wärme umgewandelt wird, als bei herkömmlicher Auslegung der LED-Treiberschaltung.

Gemäß einer vorteilhaften Weiterbildung weist der Spannungsregler ausgangsseitig einen Widerstand auf, der in Reihe zur mindestens einen LED geschaltet ist. Wird dieser Widerstand entsprechend des von der LED benötigten Stroms und der von der LED benötigten Spannung ausgelegt, so liefert der Spannungsregler nahezu einen konstanten Strom für diese LED. Durch Reihenschaltung und entsprechende Auslegung dieses Widerstandes kann die Treiberschaltung somit an den Arbeitspunkt einer oder mehrerer beliebiger LEDs angepasst werden.

Nach einer weiteren vorteilhaften Ausführungsform weist der mindestens eine Spannungsregler einen Regelanschluss auf, der über den ausgangsseitigen Widerstand des mindestens einen Spannungsreglers mit einem Spannungsausgang dieses Spannungsreglers derart verbunden ist, dass dieser Spannungsregler einen konstanten Strom bei veränderlicher Last liefert.

Ein Vorteil dieser Ausführungsform ist, dass ein erhöhter Stromverbrauch der betriebenen LED bzw. LEDs zu einem erhöhten Strom im ausgangsseitigen Widerstand und damit zu einem erhöhtem Spannungsabfall über dem Widerstand führt. Dieser erhöhte Spannungsabfall kann durch den Anschluss des Widerstandes an den Spannungsregler bzw. durch Rückführung dieses Spannungsabfalls an den Regelanschluss des Spannungsreglers von dem Spannungsregler ausgeregelt werden, wodurch sich ein im Wesentlichen konstanter Strom durch den Widerstand einstellt. Somit wird ein konstanter Strom bei veränderlicher Last durch die LEDs ohne weitere Anpassung der Schaltung ermöglicht. Der Spannungsregler nebst genanntem Widerstand dient somit als Stromquelle, d.h. als Quelle mit im Wesentlichen konstanten Strom, für die LEDs.

Vorteilhafterweise ist in der Treiberschaltung des Leuchtmittels mindestens ein Paar Platzhalter, insbesondere Steckkontakte oder Lötpads, vorgesehen, um dem der Gleichrichterschaltung an ihrem Ausgang parallel geschaltete Kondensatoren weitere Kondensatoren nachträglich parallel zu verbinden.

Ein Paar Platzhalter bezeichnet vorliegend zwei einzelne Kontakte, an die ein Kondensator mit seinen beiden Kontakten anschließbar ist. Besonders vorteilhaft ist dieses Paar von Platzhaltern als Paar von Steckkontakten oder Paar von Lödpads vorgesehen.

Es ergibt sich der Vorteil, dass die Treiberschaltung des Leuchtmittels nachträglich für einen beliebigen LED-Typen (bin) ausgelegt werden kann. Wird die Treiberschaltung mit verschiedenen LED-Typen betrieben, die unterschiedliche Arbeitspunkte, insbesondere Vorwärtsspannungen an der jeweiligen LED, benötigen, so ist ein Anpassen der Schaltung durch einfaches nachträgliches Verbinden bzw. Anschließen von einen oder mehreren weiteren Kondensatoren möglich. Somit können durch geringe Modifikationen verschieden spezifizierte LED-Typen betrieben werden können.

Gemäß einer weiteren bevorzugten Ausführungsform weist die Treiberschaltung ein Bezugspotential auf, wobei zwischen dieses Bezugspotentials und den Spannungsausgang des Spannungsreglers mindestens ein Kondensator angeschlossen wird, um die Ausgangsspannung des Spannungsreglers zu glätten. Ferner ist es möglich den Kondensator nicht direkt an das Bezugspotential oder den Spannungsausgang anzuschließen, sondern den Anschluss über ein in Reihe geschaltetes Bauteil, insbesondere einen in Reihe geschalteten Widerstand, durchzuführen.

Idealerweise liefert ein Spannungsregler eine konstante Ausgangsspannung. Um jedoch die Ausgangsspannung des Spannungsreglers im realen Betrieb zu glätten und ggf. Spannungsspitzen zu filtern, ist es vorteilhaft einen derartigen Kondensator als Glättungskondensator dem Spannungsausgang des Spannungsreglers nachzuschalten.

Vorteilhafterweise ist mindestens einer der der Gleichrichterschaltung an ihren Ausgängen parallel geschalteten Kondensatoren ein Elektrolytkondensator. Dieser Kondensator hat den Vorteil, dass er im Vergleich zu anderen Kondensatortypen eine hohe Kapazität aufweist und damit geeignet ist, um die gleichgerichtete Spannung zu glätten.

Ferner ist es vorteilhaft, mindestens einen der der Gleichrichterschaltung an ihren Ausgängen parallel geschalteten Kondensatoren als Keramikkondensator auszulegen. Derartige Keramikkondensatoren besitzen kurze Umladezeiten und sind somit geeignet ein Aufschwingen des Spannungsreglers zu verhindern.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:
- Fig. 1: ein Schaltbild eines erfindungsgemäßen Leuchtmittels mit Treiberschaltung zur elektrischen Versorgung von LEDs;
- Fig. 2: ein Diagramm zur Veranschaulichung von Spannungsverläufen der Treiberschaltung des Leuchtmittels, wie sie bei Auslegung nach herkömmlichen Gesichtspunkten bei Sollspannung einer sinusförmiger Netzwechselspannung aussehen würden;
- Fig. 3: ein Diagramm zur Veranschaulichung von Spannungsverläufen der wie in Fig. 2 ausgelegten Treiberschaltung bei einer Spannung im unteren Grenzbereich des Toleranzbereiches der sinusförmigen Netzwechselspannung;
- Fig. 4: ein Diagramm zur Veranschaulichung von Spannungsverläufen der wie in Fig. 2 ausgelegten Treiberschaltung bei einer Spannung im oberen Grenzbereich des Toleranzbereichs der sinusförmigen Netzwechselspannung;
- Fig. 5: ein Diagramm zur Veranschaulichung von Spannungsverläufen der Treiberschaltung des Leuchtmittels mit erfindungsgemäßer Auslegung bei Sollspannung der sinusförmiger Netzwechselspannung;
- Fig. 6: ein Diagramm zur Veranschaulichung von Spannungsverläufen der Treiberschaltung bei erfindungsgemäßer Auslegung, die im unteren Grenzbereich des Toleranzbereichs der sinusförmigen Netzwechselspannung betrieben wird; und
- Fig. 7: ein Diagramm zur Veranschaulichung von Spannungsverläufen der Treiberschaltung bei erfindungsgemäßer Auslegung, die im oberen Grenzbereich des Toleranzbereichs der sinusförmigen Netzwechselspannung arbeitet.

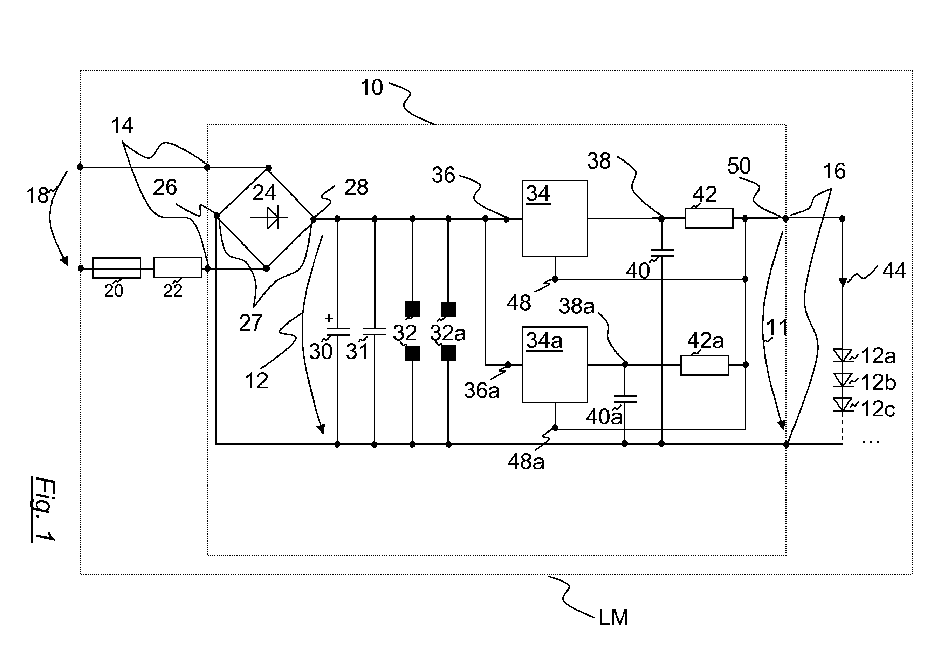

Fig. 1 zeigt eine vorteilhafte Ausführungsform des erfindungsgemäßen Leuchtmittels LM mit der Treiberschaltung 10 und einer Mehrzahl von LEDs 12a bis 12c, bspw. 60 bis 90, vorzugsweise 75, LEDs, wobei die Treiberschaltung 10 einen Treibereingang 14 und einen Treiberausgang 16 aufweist. Eine sinusförmige Netzwechselspannung 18 wird über eine Überlastsicherung 20, über einen Widerstand 22 und den Treibereingang 14 einer Gleichrichterschaltung 24 zugeführt.

Die Überlastsicherung 20 wird eingesetzt, um bei einem Defekt der Treiberschaltung 10 oder der LEDs 12a bis 12c eine zu große Leistungsaufnahme des Leuchtmittels LM zu verhindern. Der Widerstand 22 hat die Aufgabe, Überspannungsspitzen durch elektromagnetische Einkopplung zu reduzieren. Dieser Widerstand 22 ist in der Regel niederohmig, z.B. mit einem Wert von 0,5 bis 20 Ohm, ausgelegt. Die Sicherung 20, der Widerstand 22 und der Treibereingang bilden die eingangsseitige Beschaltung der Gleichrichterschaltung 24.

Anschlüsse bzw. Kontakte 26, 28 der Gleichrichterschaltung 24 liefern eine gleichgerichtete sinusförmige Netzwechselspannung 52 und bilden somit einen Ausgang 27 der Gleichrichterschaltung 24. Der Gleichrichterschaltung 24 ist ein Kondensator 30 und ggf. ein weiterer Kondensator 31 parallel geschaltet, wobei diese Kondensatoren 30, 31 mehrfach vorhanden sein können und nur im gezeigten Ausführungsbeispiel als einzelner Kondensator 30 und einzelner Kondensator 31 dargestellt sind. Weiterhin sind zwei Paar Platzhalter 32, 32a parallel zu den vorhandenen Kondensatoren 30, 31 angeschlossen und Spannungsregler 34 und 34a sind der Gleichrichterschaltung 24 nachgeschaltet.

Der Kondensator 30 ist vorzugsweise ein Elektrolytkondensator, der die Aufgabe hat, die gleichgerichtete sinusförmige Netzwechselspannung zu glättet. Hierfür kann aber auch ein anderer Kondensatortyp eingesetzt werden. Der Kondensator 31 ist als vorzugsweise keramischer Kondensator ausgelegt, um hochfrequente Spannungsspitzen zu glätten, die ein Aufschwingen der Spannungsregler 34, 34a nach sich ziehen könnten. Alternativ kann ein anderer Kondensatortyp verwendet werden.

Die zwei Paare Platzhalter 32, 32a ermöglichen eine Erhöhung der Kapazität, ggf. auch zu einem späteren Zeitpunkt, indem weitere Kondensatoren jeweils an ein Paar von Platzhalter, insbesondere durch Stecken oder Löten, angebracht werden. Die Fig. 1 zeigt zwei Paar von Platzhaltern, wobei auch eine Schaltung mit nur einem Paar Platzhalter oder mit mehr als zwei Paar Platzhaltern möglich ist.

Die Spannungsregler 34 und 34a sind der Gleichrichterschaltung 24 nachgeschaltet. Das bedeutet, dass die Spannungseingänge 36 und 36a der Spannungsregler 34, 34a mit dem Anschluss 28 der Gleichrichterschaltung 24 verbunden sind. Somit wird den Spannungsreglern 34 und 34a eingangsseitig die geglättete gleichgerichtete sinusförmige Netzwechselspannung zugeführt.

Die Spannungsregler 34 und 34a weisen weiterhin zwei Spannungsausgänge 38 und 38a auf, die sich ausgangsseitig der Spannungsregler 34 und 34a befinden. Diese Spannungsausgänge 38, 38a sind jeweils über einen Kondensator 40, 40a mit einem Bezugspotential der Treiberschaltung 10 verbunden, die die Ausgangsspannung der Spannungsregler glätten. Im dargestellten Ausführungsbeispiel wird dieses Bezugspotential der Treiberschaltung 10 durch den Anschluss 26 der Gleichrichterschaltung 24 geliefert.

Den Spannungsreglern 34, 34a ist ausgangsseitig jeweils ein Widerstand 42, 42a nachgeschaltet, wobei in diesem Ausführungsbeispiel jeweils der erste Anschluss jedes Widerstandes 42, 42a mit den Ausgängen 38, 38a der Spannungsregler 34, 34a verbunden ist. Mit dem jeweiligen anderen Anschluss der Widerstände 42, 42a werden die Regelanschlüsse 48, 48a verbunden. Diese zweiten Anschlüsse der Widerstände 42, 42a werden ebenfalls an einen Anschluss 50 angeschlossen. Der Anschluss 50 bildet zusammen mit dem Anschluss 26 der Gleichrichterschaltung den Ausgang 16 der Treiberschaltung.

Die Widerstände 42, 42a bewirken, dass die Spannungsregler 34, 34a als Konstantstromquelle betrieben werden können. Dadurch kann den am Ausgang 16 der Treiberschaltung 10 in Reihe geschalteten LEDs 12a bis c ein im Wesentlichen konstanter Strom 44 zum Betrieb zur Verfügung gestellt und ein Arbeitspunkt eingestellt werden. Ein Betrieb der Spannungsregler 34, 34a als Konstantstromquelle ist möglich, da die Spannung über den Widerständen 42, 42a jeweils an den Spannungsausgängen 38, 38a und den Regelanschlüssen 48, 48a gemessen wird.

Hier wird ausgenutzt, dass bei Veränderung des Stromverbrauchs am Ausgang 16 der Treiberschaltung 10 durch die in Reihe geschalteten LEDs 12a bis c, sich auch der Strom durch die Widerstände 42, 42a ändert. Durch Änderung des Stroms durch die Widerstände 42, 42a ändert sich auch eine Spannung über den Widerständen 42, 42a, die von den Spannungsreglern 34, 34a ausgeglichen wird, wodurch sich wieder ein nahezu konstanter Strom durch die Widerstände 42, 42a einstellt.

Das in Fig. 1 gezeigte Ausführungsbeispiel weist einen ersten Spannungsregler 34 mit nachgeschalteten Widerstand 42 und nachgeschalteten Kondensator 40 und einen zweiten Spannungsregler 34a mit nachgeschalteten Widerstand 42a und Kondensator 40a auf. Diese Ausführung ist exemplarisch gewählt um zu zeigen, dass ein hoher Ausgangsstrom, der für den Betrieb der LEDs am Ausgang 16 benötigt wird, bei Bedarf aus mehr als einem Spannungsregler erzeugt werden kann, da ein einziger Spannungsregler ggf. nicht genügend Strom liefern kann. Es wäre auch möglich, noch weitere parallel zueinander geschaltete Spannungsregler nebst Widerständen und Kondensatoren in entsprechender Anordnung in der Treiberschaltung 10 vorzusehen. Es ist daher möglich, diese weiteren Spannungsregler wie in Fig. 1 durch die beiden vorhandenen Spannungsregler 34, 34a mit Widerständen 42, 42a und Kondensatoren 40, 40a ausgangsseitig zu beschalten. Alternativ ist die Treiberschaltung jedoch auch nur mit einem einzigen Spannungsregler vorgesehen, so dass der Spannungsregler 34a, der Widerstand 42a und der Kondensator 40a entfallen.

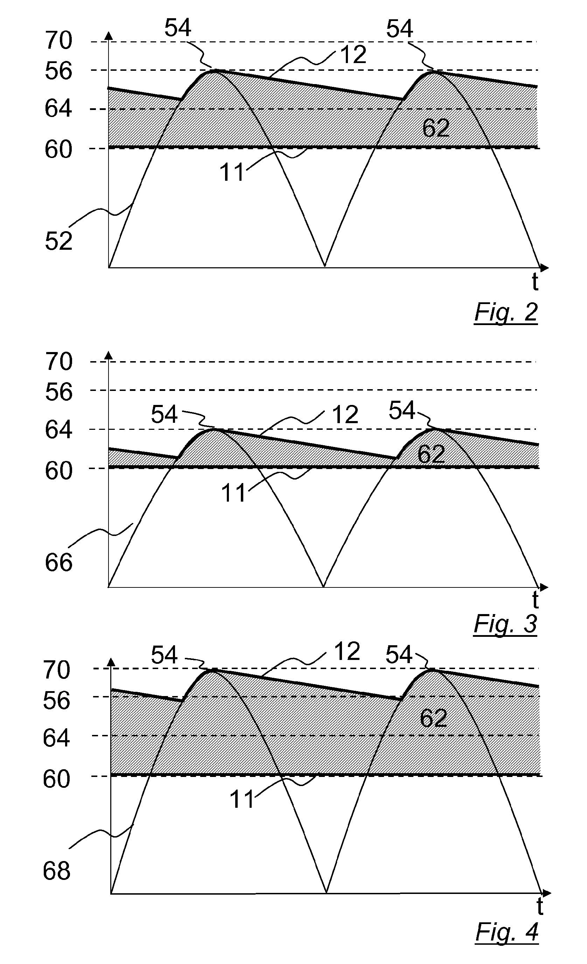

Die Fig. 2 bis 4 zeigen die Spannungsverläufe an bzw. in Treiberschaltung 10, wenn die Schaltung gemäß Fig. 1 unter herkömmlichen Gesichtspunkten ausgelegt wäre. Fig. 2 zeigt exemplarisch eine gleichgerichtete sinusförmige Netzwechselspannung 52, wie sie am Ausgang 27 der Gleichrichterstellung 24 anliegen würde, wenn dieser Ausgang 27 nicht beschaltet wäre. Die Netzwechselspannung 52 liegt im Sollbereich und weist somit Sollspitzenwerte 54 auf, die eine Sollspitzenspannung 56 erreichen. Durch die der Gleichrichterschaltung 24 an ihrem Ausgang 27 parallel geschalteten Kondensatoren 30,31 würde bei einer derartigen Schaltungsauslegung unter herkömmlichen Gesichtspunkten diese gleichgerichtete sinusförmige Netzwechselspannung geglättet werden und ergäbe eine geglättete gleichgerichtete sinusförmige Spannung 12. Der mindestens eine Spannungsregler 34 würde eingangsseitig mit einer derartigen Eingangsspannung 12 betrieben, dass am Ausgang 38 eine konstante Spannung 11 geliefert würde, die der Spannung 60 entspräche. Die schraffierte Fläche 62 zeigt hier die Verlustleistung, die durch Umwandeln der elektrischen Energie in Wärme erzeugt würde und somit der Verlustleistung entspräche.

Fig. 3 zeigt den Spannungsverlauf der Treiberschaltung 10, die wie im Zusammenhang mit Fig. 2 erläutert, ausgelegt wäre. Jedoch wird der Gleichrichterschaltung 24 in Fig. 3 eine sinusförmige Netzwechselspannung 18 zugeführt, die im unteren Grenzbereich ihres Toleranzbereiches liegt. Es würde sich somit ohne weitere Beschaltung am Ausgang 27 der Gleichrichterschaltung 24 der exemplarisch dargestellte Spannungsverlauf 66 ergeben. Die Spitzenwerte 54 der gleichgerichteten sinusförmigen Netzwechselspannung würden somit eine minimale Spitzenspannung 64 erreichen. Die geglättete gleichgerichtete sinusförmige Netzwechselspannung 12 läge eingangsseitig an mindestens einem Spannungsregler 34 an. Die geregelte geglättete gleichgerichtete sinusförmige Netzwechselspannung entspräche wieder wie in Fig. 2 einer konstanten Spannung 11, die der Spannung 60 entspräche. Die schraffierte Fläche 62 ist wesentlich kleiner als in Fig. 2, wodurch eine geringere Verlustleistung als im Falle von Fig. 2 entsteht.

Fig. 4 zeigt wiederum den Spannungsverlauf der Treiberschaltung 10, die wie im Zusammenhang mit Fig. 2 erläutert, ausgelegt wären. Die noch ungeglättete gleichgerichtete sinusförmige Netzwechselspannung 68 wird für den Fall dargestellt, dass die sinusförmige Netzwechselspannung im oberen Grenzbereich ihres Toleranzbereiches liegt. Die Spitzenwerte 54 der gleichgerichteten sinusförmigen Netzwechselspannung liegen nun gegenüber Fig. 2 und Fig. 3 wesentlich höher auf einer maximalen Spitzenspannung 70. Wiederum ist die geglättete gleichgerichtete sinusförmige Netzwechselspannung 12 eingezeichnet, mit der der mindestens eine Spannungsregler 34 eingangsseitig betrieben wird. Weiterhin ist die Ausgangsspannung 11 des mindestens einen Spannungsreglers 34 eingetragen, die wiederum wie in Fig. 2 und Fig. 3 einen konstanten Wert 60 annehmen würde. In diesem Falle würde die Schaltung eine sehr große Verlustleistung 62 aufweisen.

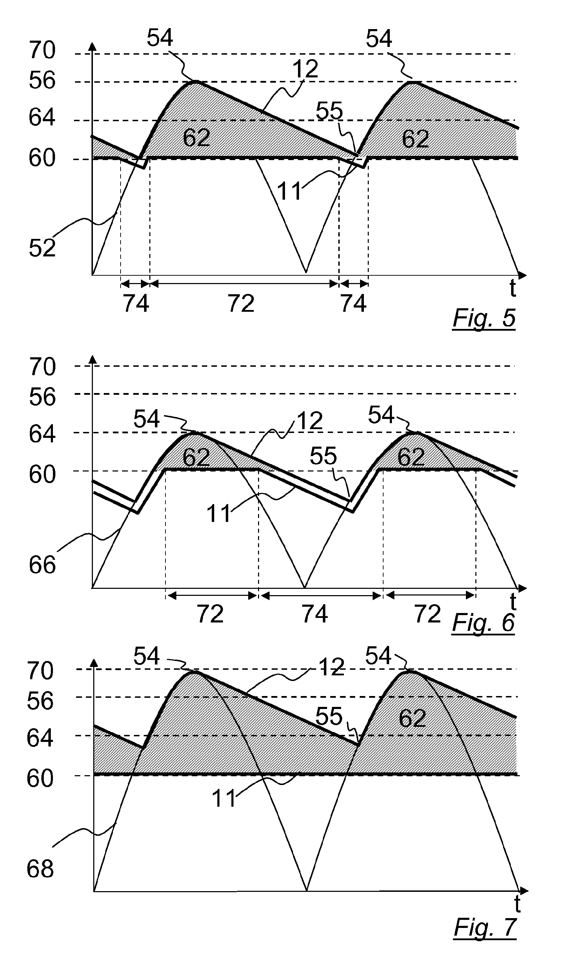

Fig. 5 bis 7 zeigen nun den Spannungsverlauf der Treiberschaltung 10 des Leuchtmittels LM, der durch Bestimmung der Kapazität des mindestens einen Kondensators 30 in vorteilhafter erfindungsgemäßer Weise ausgelegt ist.

Fig. 5 zeigt den Spannungsverlauf bei erfindungsgemäßer Auslegung für den Fall, dass die sinusförmige Netzwechselspannung 18 im Bereich ihres Sollwertes (wie in Fig. 2) liegt. Die Spitzenwerte 54 liegen auf der Sollspitzenspannung 56. Da die Schaltung anders als in Fig. 2 ausgelegt ist, fällt die geglättete gleichgerichtete sinusförmige Netzwechselspannung 12 nach Erreichen des Sollspitzenwertes 54 schneller ab als in Fig. 2. Die geglättete gleichgerichtete sinusförmige Netzwechselspannung 12 fällt so schnell ab, dass sie unter einen noch vom Spannungsregler 34, 34a regelbaren Spannungswert fällt, bevor der nächste Spitzenwert 54 erreicht wird. Liegt diese schneller abfallende geglättete gleichgerichtete sinusförmige Netzwechselspannung 12 somit eingangsseitig am Spannungsregler 34 an, so bewirkt sie ausgangsseitig des Spannungsreglers 34 eine Ausgangsspannung 11. Diese Ausgangsspannung 11 beginnt im Bereich des Minimums 55 dieser Eingangsspannung abzufallen. Der Begriff "Bereich des Minimums" 55 bezieht sich auf den zeitlichen Bereich, d.h. "Bereich" ist im zeitlichen Sinn zu verstehen.

Fig. 5 zeigt einen zeitlichen Bereich 72, in dem der Spannungsregler 34 die geglättete gleichgerichtete sinusförmige Netzwechselspannung 12 in eine konstante Spannung 11 regelt. Des Weiteren zeigt die Fig. 5 einen zeitlichen Bereich 74 in dem die Spannung des Spannungsreglers von einem konstanten Wert abfällt.

Es ergibt sich, dass die in Reihe geschalteten LEDs 12a bis c im Bereich 74 mit einem geringeren Strom und einer geringen Spannung betrieben werden, als es der Arbeitspunkt der LEDs vorsieht. Da die sinusförmige Netzwechselspannung jedoch in der Regel mit einer Frequenz von 50 oder 60 Hertz betrieben wird und sich für die gleichgerichtete sinusförmige Netzwechselspannung eine Frequenz von 100 bzw. 120 Hertz ergibt, kann das menschliche Auge bzw. der menschliche Sehapparat das kurzzeitige Abfallen der Ausgangsspannung am Spannungsregler nicht als Flackern bemerken.

Fig. 6 zeigt die Schaltung für den Fall, dass die sinusförmige Netzwechselspannung 18 im unteren Grenzbereich ihres Toleranzbereichs liegt. Wie in Fig. 3 liegen die Spitzenwerte 54 der gleichgerichteten sinusförmigen Netzwechselspannung auf einer minimalen Spitzenspannung 64. Die Eingangsspannung 12 am Spannungsregler 34 fällt durch gleiche Auslegung der Schaltung wie in Fig. 5 ebenfalls schneller ab als in Fig. 3. Daraus ergibt sich, dass der mindestens eine Spannungsregler 34 eingangsseitig mit einer derartigen Eingangsspannung 12 betrieben wird, dass der mindestens eine Spannungsregler ausgangsseitig eine Ausgangsspannung 11 liefert, die signifikant vor Erreichen des Bereichs 74 des Minimums 55 der Eingangsspannung 12 beginnt abzufallen. Signifikant bedeutet in diesem Fall, dass die Ausgangsspannung 11 des Spannungsreglers 34 zeitlich schon kurz nach Erreichen des Spitzenwertes 54 der geglätteten gleichgerichteten sinusförmigen Netzwechselspannung von ihrem konstanten Wert ausgehend beginnt abzufallen.

Wie in Fig. 5 wird in Fig. 6 der zeitliche Bereich 72 dargestellt, in dem die Ausgangsspannung 11 des Spannungsreglers 34 konstant ist. Der zeitliche Bereich 74 zeigt den abfallenden Bereich der Ausgangsspannung 11 des Spannungsreglers 34, in dem die Eingangsspannung 12 des Spannungsreglers 34 nicht mehr konstant gehalten werden kann und abfällt.

Fig. 7 zeigt die Spannungsverläufe der wie in Fig. 5 und in Fig. 6 ausgelegten Treiberschaltung. Wieder ist die gleichgerichtete sinusförmige Netzwechselspannung 68 exemplarisch eingezeichnet. Die Spitzenwerte der sinusförmigen Netzwechselspannung liegen wie in Fig. 4 auf einer maximalen Spitzenspannung 70. Der weitere Vergleich zu Fig. 4 zeigt, dass die geglättete gleichgerichtete sinusförmige Netzwechselspannung 12, die eingangsseitig dem Spannungsregler 34 zugeführt wird, nach Erreichen der Spitzenwerte steiler abfällt. Entgegen der Fälle aus Fig. 5 und Fig. 6 wird der Spannungsregler jedoch eingangsseitig immer mit einer derartigen Eingangsspannung 12 betrieben, dass der mindestens eine Spannungsregler 34 ausgangsseitig eine konstante Ausgangsspannung 60 liefert, die einen konstant Wert aufweist.

Vergleicht man nun Fig. 2 mit Fig. 5, Fig. 3 mit Fig. 6 sowie Fig. 4 mit Fig. 7 ist zu erkennen, dass bei neuartiger Auslegung der Treiberschaltung in Fig. 5 bis Fig. 7 die schraffierten Flächen 62, die die Verlustleistung bzw. die in Wärme umgewandelte elektrische Energie darstellen, wesentlich kleiner sind als bei herkömmlicher Auslegung gemäß Fig. 2 bis Fig. 4.

Alle in der vorgenannten Figurenbeschreibung, in den Ansprüchen und in der Beschreibungseinleitung genannte Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Leuchtmittel mit mindestens einer LED (12a-c) und einer Treiberschaltung (10) zur elektrischen Versorgung der mindestens einen LED (12a-c), wobei die Treiberschaltung (10) zum Betrieb mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbunden Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31 ) parallel geschaltet ist und die Treiberschaltung (10) ausgangsseitig der Gleichrichterschaltung (24) mindestens einen Spannungsregler (34, 34a) aufweist, wobei die sinusförmige Netzwechselspannung (18) durch die Gleichrichterschaltung (24) gleichrichtbar, durch den mindestens einen Kondensator (30, 31) glättbar und durch den mindestens einen Spannungsregler (34, 34a) konstant regelbar ist,
**dadurch gekennzeichnet, dass**
die Treiberschaltung (10) durch Bestimmung der Kapazität des mindestens einen Kondensators (30, 31) derart ausgelegt ist, dass im Falle, dass die sinusförmige Netzwechselspannung (18) im Bereich ihres Sollspitzenwerts (56) oder Solleffektivwerts liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt.

2. Leuchtmittel nach Anspruch 1,
**dadurch gekennzeichnet, dass**
die Treiberschaltung (10) durch Bestimmung der Kapazität des mindestens einen Kondensators (30, 31) derart ausgelegt ist, dass im Falle, dass der Spitzenwert oder Effektivwert der sinusförmigen Netzwechselspannung (18) im unteren Grenzbereich ihres Toleranzbereichs (64) liegen, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die signifikant vor Erreichen des Bereichs des Minimums (55) der Eingangsspannung abzufallen.

3. Leuchtmittel nach Anspruch 1 oder 2,
**dadurch gekennzeichnet, dass**
die Treiberschaltung (10) durch Bestimmung der Kapazität des mindestens einen Kondensators (30, 31 ) derart ausgelegt ist, dass im Falle, dass der Spitzenwert oder Effektivwert der sinusförmigen Netzwechselspannung im oberen Grenzbereich ihres Toleranzbereichs (70) liegen, der mindestens eine Spannungsregler eingangsseitig mit einer derartigen Eingangsspannung (12) betrieben wird, dass der mindestens eine Spannungsregler (34, 34a) ausgangsseitig eine Ausgangsspannung (11) liefert, die einen konstanten Wert aufweist.

4. Leuchtmittel nach einem der vorherigen Ansprüche,
**dadurch gekennzeichnet, dass**
dem mindestens einen Spannungsregler (34, 34a) ausgangsseitig ein Widerstand (42, 42a) und in Reihe zu dem Widerstand (42, 42a) die mindestens eine LED (12a-c) nachgeschaltet ist und der Spannungsregler (34, 34a) somit als Stromquelle für diese LED (12a-c) betreibbar ist.

5. Leuchtmittel nach Anspruch 4,
**dadurch gekennzeichnet, dass**
der mindestens eine Spannungsregler (34, 34a) einen Regelanschluss (48, 48a) aufweist, der über den ausgangsseitigen Widerstand (42, 42a) des mindestens einen Spannungsreglers (34, 34a) mit einem Spannungsausgang (38, 38a) dieses Spannungsreglers derart verbunden ist, dass dieser Spannungsregler (34, 34a) einen konstanten Strom bei veränderlicher Last liefert.

6. Leuchtmittel nach einem der vorherigen Ansprüche,
**dadurch gekennzeichnet, dass**
mindestens ein Paar Platzhalter (32, 32a), insbesondere Steckkontakte oder Lötpads, vorgesehen ist, die derart ausgelegt sind, um dem der Gleichrichterschaltung (24) an ihrem Ausgang (27) parallel geschalteten wenigstens einen oder mehrere Kondensatoren (30, 31) weitere Kondensatoren nachträglich parallel zu verbinden.

7. Leuchtmittel nach einem der vorherigen Ansprüche,
**dadurch gekennzeichnet, dass**
zwischen ein Bezugspotential der Treiberschaltung (26) und den Spannungsausgang (38, 38a) des Spannungsreglers (34, 34a) mindestens ein Kondensator (40, 40a) angeschlossen ist, durch den die Ausgangsspannung (11) des Spannungsreglers (34, 34a) glättbar ist.

8. Leuchtmittel nach einem der vorherigen Ansprüche,
**dadurch gekennzeichnet, dass**
mindestens einer der der Gleichrichterschaltung (24) an ihrem Ausgang (27) parallel geschalteten Kondensatoren (30, 31) ein Elektrolytkondensator (30) ist, durch den die gleichgerichtete Spannung glättbar ist und mindestens ein weiterer der der Gleichrichterschaltung (24) an ihrem Ausgang (27) parallel geschalteten Kondensatoren (30, 31) ein Keramikkondensator (31 ) ist.

9. Verfahren zum Betreiben eines Leuchtmittels (LM) mit mindestens einer LED (12a-c) und einer Treiberschaltung (10) zum elektrischen Versorgen der mindestens einen LED (12a-c), wobei die Treiberschaltung (10) zum Betreiben mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbundenen Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens ein Spannungsregler (34, 34a) aufweist, wobei die sinusförmige Netzwechselspannung (18) durch die Gleichrichterschaltung (24) gleichgerichtet, durch den mindestens einen Kondensator (30, 31) geglättet und durch den mindestens einen Spannungsregler (34, 34a) konstant geregelt wird,
**dadurch gekennzeichnet, dass**
die Treiberschaltung (10) durch Bestimmung der Kapazität des mindestens einen Kondensators (30, 31) derart betrieben wird, dass im Falle, dass die sinusförmige Netzwechselspannung (18) im Bereich ihres Sollspitzenwerts (56) oder Solleffektivwertes liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt.

10. Verfahren nach Anspruch 9,
**dadurch gekennzeichnet, dass**
der Spannungsregler (34, 34a) als Stromquelle für die mindestens eine LED (12a-c) betrieben wird, in dem dem mindestens einen Spannungsregler (34, 34a) ausgangsseitig ein Widerstand (42, 42a) nachgeschaltet ist.

11. Verfahren nach Anspruch 10,
**dadurch gekennzeichnet, dass**
der mindestens eine Spannungsregler (34, 34a) einen konstanten Strom bei veränderlicher Last liefert, in dem der mindestens eine Spannungsregler (34, 34a) einen Regelanschluss (48, 48a) aufweist, der über den ausgangsseitigen Widerstand (42, 42a) des mindestens einen Spannungsreglers (34, 34a) mit einem Spannungsausgang (38, 38a) dieses Spannungsreglers (34, 34a) verbunden ist.

12. Verfahren nach einem der Ansprüche 9 bis 11,
**dadurch gekennzeichnet, dass**
die Ausgangsspannung (11) des Spannungsreglers (34, 34a) mittels mindestens eines zwischen ein Bezugspotential der Treiberschaltung (26) und dem Spannungsausgang (38, 38a) des Spannungsreglers (34, 34a) angeschlossenen Kondensator (40, 40a) geglättet wird.

13. Verwendung eines Leuchtmittels (LM), insbesondere nach einem der Ansprüche 1 bis 8, mit mindestens einer LED (12a-c) und einer Treiberschaltung (10) zur elektrischen Versorgung der mindestens einen LED (12a-c), wobei die Treiberschaltung (10) zum Betrieb mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbundenen Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens einen Spannungsregler (34, 34a) aufweist, wobei die sinusförmige Netzwechselspannung (18) durch die Gleichrichterschaltung (24) gleichrichtbar, durch den mindestens einen Kondensator (30, 31) glättbar und durch den mindestens einen Spannungsregler (34, 34a) konstant regelbar ist,
**dadurch gekennzeichnet, dass**
die Treiberschaltung (10) durch die Bestimmung der Kapazität des mindestens einen Kondensators (30, 31) derart betrieben wird, dass im Falle, dass die sinusförmige Netzwechselspannung (18) im Bereich ihres Sollspitzenwerts (56) oder Solleffektivwertes liegt, den mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt.

14. Verfahren zum Dimensionieren eines Leuchtmittels (LM), insbesondere nach einem der Ansprüche 1 bis 8, mit mindestens einer LED (12a-c) und einer Treiberschaltung (10) zum elektrischen Versorgen der mindestens einen LED (12a-c), wobei die Treiberschaltung (10) zum Betreiben mit einer sinusförmigen Netzwechselspannung (18) ausgelegt ist und einen Treibereingang (14) zum Zuführen der sinusförmigen Netzwechselspannung (18) und einen mit der mindestens einen LED verbundenen Treiberausgang (16), sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens einen Spannungsregler (34, 34a) aufweist, wobei die sinusförmige Netzwechselspannung (18) durch die Gleichrichterschaltung (24) gleichgerichtet, durch den mindestens einen Kondensator (30, 31) geglättet und durch den mindestens einen Spannungsregler (34, 34a) konstant geregelt wird,
**dadurch gekennzeichnet, dass**
die Treiberschaltung (10) durch Bestimmung der Kapazität des mindestens einen Kondensators (30, 31) derart dimensioniert wird, dass im Falle, dass die sinusförmige Netzwechselspannung (18) im Bereich ihres Sollspitzenwerts (56) oder Solleffektivwertes liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt.

## Geänderte Patentansprüche

### Geänderte Patentansprüche gemäss Regel 137(2) EPÜ.

**1.** Leuchtmittel mit mindestens einer LED (12a-c) und einer Treiberschaltung (10) zur elektrischen Versorgung der mindestens einen LED (12a-c), wobei die Treiberschaltung (10) zum Betrieb mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbunden Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens einen Spannungsregler (34, 34a) aufweist, wobei die Gleichrichterschaltung (24) derart ausgebildet ist, um die sinusförmige Netzwechselspannung (18) gleichzurichten, der mindestens eine Kondensator (30, 31) derart ausgebildet ist, um die gleichgerichtete sinusförmige Netzwechselspannung (18) zu glätten und der mindestens eine Spannungsregler (34, 34a) derart ausgebildet ist, um die geglättete gleichgerichtete sinusförmige Netzwechselspannung (18) zu regeln,
**dadurch gekennzeichnet, dass**
die Kapazität des mindestens einen Kondensators (30, 31) derart bestimmt ist, dass die Treiberschaltung (10) derart ausgelegt ist, dass im Falle, dass die sinusförmige Netzwechselspannung (18) im Bereich ihres Sollspitzenwerts (56) oder Solleffektivwerts liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt ,wobei die mindestens eine LED (12a - c) im zeitlichen Bereich (74), in dem die Ausgangsspannung (11) von einem konstanten Wert abfällt, mit einer geringeren Spannung betrieben wird, als es der Arbeitspunkt der mindestens einen LED (12a - c) vorsieht.

**2.** Leuchtmittel nach Anspruch 1,
**dadurch gekennzeichnet, dass**
die Kapazität des mindestens einen Kondensators (30, 31) derart bestimmt ist, dass die Treiberschaltung (10) derart ausgelegt ist, dass im Falle, dass der Spitzenwert oder Effektivwert der sinusförmigen Netzwechselspannung (18) im unteren Grenzbereich ihres Toleranzbereichs (64) liegen, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die signifikant vor Erreichen des Bereichs des Minimums (55) der Eingangsspannung abzufallen ,wobei die mindestens eine LED (12a - c) im zeitlichen Bereich (74), in dem die Ausgangsspannung (11) von einem konstanten Wert abfällt, mit einer geringeren Spannung betrieben wird, als es der Arbeitspunkt der mindestens einen LED (12a - c) vorsieht.

**3.** Leuchtmittel nach Anspruch 1 oder 2,
**dadurch gekennzeichnet, dass**
die Kapazität des mindestens einen Kondensators (30, 31) derart bestimmt ist, dass die Treiberschaltung (10) derart ausgelegt ist, dass im Falle, dass der Spitzenwert oder Effektivwert der sinusförmigen Netzwechselspannung im oberen Grenzbereich ihres Toleranzbereichs (70) liegen, der mindestens eine Spannungsregler eingangsseitig mit einer derartigen Eingangsspannung (12) betrieben wird, dass der mindestens eine Spannungsregler (34, 34a) ausgangsseitig eine Ausgangsspannung (11) liefert, die einen konstanten Wert aufweist.
[Es folgen die ursprünglichen Ansprüche 4 bis 8 vom 20.01.2010]

**9.** Verfahren zum Betreiben eines Leuchtmittels (LM) mit mindestens einer LED (12a-c) und einer Treiberschaltung (10) zum elektrischen Versorgen der mindestens einen LED (12a-c), wobei die Treiberschaltung (10) zum Betreiben mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbundenen Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens ein Spannungsregler (34, 34a) aufweist, wobei die sinusförmige Netzwechselspannung (18) durch die Gleichrichterschaltung (24) gleichgerichtet, durch den mindestens einen Kondensator (30, 31) geglättet und durch den mindestens einen Spannungsregler (34, 34a) geregelt wird,
**dadurch gekennzeichnet, dass**
die Kapazität des mindestens einen Kondensators (30, 31) derart bestimmt ist, dass die Treiberschaltung (10) derart betrieben wird, dass im Falle, dass die sinusförmige Netzwechselspannung (18) im Bereich ihres Sollspitzenwerts (56) oder Solleffektivwertes liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt ,wobei die mindestens eine LED (12a - c) im zeitlichen Bereich (74), in dem die Ausgangsspannung (11) von einem konstanten Wert abfällt, mit einer geringeren Spannung betrieben wird, als es der Arbeitspunkt der mindestens einen LED (12a - c) vorsieht.
[Es folgen die ursprünglichen Ansprüche 10 bis 12 vom 20.01.2010]

**13.** Verwendung eines Leuchtmittels (LM), insbesondere nach einem der Ansprüche 1 bis 8, mit mindestens einer LED (12a-c) und einer Treiberschaltung (10) zur elektrischen Versorgung der mindestens einen LED (12a-c), wobei die Treiberschaltung (10) zum Betrieb mit einer sinusförmigen Netzwechselspannung (18) ausgelegt ist und einen Treibereingang (14) zum Zuführen der sinusförmigen Netzwechselspannung (18) und einen mit der mindestens einen LED (12a-c) verbundenen Treiberausgang (16) sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens einen Spannungsregler (34, 34a) aufweist, wobei die Gleichrichterschaltung (24) derart ausgebildet ist, um die sinusförmige Netzwechselspannung (18) gleichzurichten, der mindestens eine Kondensator (30, 31) derart ausgebildet ist, um die gleichgerichtete sinusförmige Netzwechselspannung (18) zu glätten und der mindestens eine Spannungsregler (34, 34a) derart ausgebildet ist, um die geglättete gleichgerichtete sinusförmige Netzwechselspannung (18) zu regeln,
**dadurch gekennzeichnet, dass**
die Kapazität des mindestens einen Kondensators (30, 31) derart bestimmt ist, dass die Treiberschaltung (10) derart betrieben wird, dass im Falle, dass die sinusförmige Netzwechselspannung (18) im Bereich ihres Sollspitzenwerts (56) oder Solleffektivwertes liegt, den mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt ,wobei die mindestens eine LED (12a - c) im zeitlichen Bereich (74), in dem die Ausgangsspannung (11) von einem konstanten Wert abfällt, mit einer geringeren Spannung betrieben wird, als es der Arbeitspunkt der mindestens einen LED (12a - c) vorsieht.

**14.** Verfahren zum Dimensionieren eines Leuchtmittels (LM), insbesondere nach einem der Ansprüche 1 bis 8, mit mindestens einer LED (12a-c) und einer Treiberschaltung (10) zum elektrischen Versorgen der mindestens einen LED (12a-c), wobei die Treiberschaltung (10) zum Betreiben mit einer sinusförmigen Netzwechselspannung (18) ausgelegt ist und einen Treibereingang (14) zum Zuführen der sinusförmigen Netzwechselspannung (18) und einen mit der mindestens einen LED verbundenen Treiberausgang (16), sowie eine Gleichrichterschaltung (24) aufweist, wobei die sinusförmige Netzwechselspannung (18) über den Treibereingang (14) der Gleichrichterschaltung (24) zugeführt wird und der Gleichrichterschaltung (24) an ihrem Ausgang (27) mindestens ein Kondensator (30, 31) parallel geschaltet ist und die Treiberschaltung (10) ausgangsseitig der Gleichrichterschaltung (24) mindestens einen Spannungsregler (34, 34a) aufweist, wobei die sinusförmige Netzwechselspannung (18) durch die Gleichrichterschaltung (24) gleichgerichtet, durch den mindestens einen Kondensator (30, 31) geglättet und durch den mindestens einen Spannungsregler (34, 34a) geregelt wird,
**dadurch gekennzeichnet, dass**
das Dimensionieren des Leuchtmittels (LM) ein derartiges Dimensionieren der Treiberschaltung (10) umfasst, dass die Kapazität des mindestens einen Kondensators (30, 31) derart bestimmt wird, dass im Falle, dass die sinusförmige Netzwechselspannung (18) im Bereich ihres Sollspitzenwerts (56) oder Solleffektivwertes liegt, der mindestens eine Spannungsregler (34, 34a) eingangsseitig mit einer derartigen Eingangsspannung (12) betrieben wird, dass der mindestens eine Spannungsregler (34, 34a) ausgangsseitig eine Ausgangsspannung (11) liefert, die im Bereich des Minimums (55) dieser Eingangsspannung (12) abzufallen beginnt ,wobei die mindestens eine LED (12a - c) im zeitlichen Bereich (74), in dem die Ausgangsspannung (11) von einem konstanten Wert abfällt, mit einer geringeren Spannung betrieben wird, als es der Arbeitspunkt der mindestens einen LED (12a - c) vorsieht.
